# EUROPEAN PATENT APPLICATION

(11) **EP 2 341 239 A2**
(43) Date of publication of application: **06.07.2011**
(21) Application number: 10194837.0
(22) Date of filing: 14.12.2010
(51) Int. Cl.: F03D 1/06

(54) **Spar for a wind turbine rotor blade**

(30) Priority: 30.12.2009 US 650213
(71) Applicant: General Electric Company, Schenectady, NY 12345 (US)
(72) Inventor: Wang, Jing, Greenville, SC 29615 (US)
(74) Representative: Bedford, Grant Richard

(57) **Abstract**

A spar (200) for a wind turbine rotor blade (112) is provided. The spar includes a support member (206), and a spar cap (202,204) coupled to the support member, the spar cap comprising a plurality of pultruded profile segments (600).

## Description

The subject matter described herein relates generally to spars and, more particularly, to a spar for a wind turbine rotor blade and a method for fabricating the same.

Many known wind turbines include a tower and a rotor mounted on the tower via a nacelle. The rotor includes a number of blades that facilitate converting wind energy into rotational energy. The rotor drives a generator through a gearbox via a rotor shaft, and the gearbox steps up the inherently low rotational speed of the rotor shaft such that the generator can convert the mechanical energy to electrical energy.

Because many known wind turbine blades undergo significant loading during operation, at least some known wind turbine blades are fabricated with a fiber-reinforced spar running internally therethrough to facilitate transferring loads imparted on an aerodynamically shaped shell that envelops the spar. While at least some known spars have increased load bearing characteristics, these known spars are also fabricated using an increased number of fibers that result in an increased weight of the spar. In that regard, increasing a load bearing characteristic of a spar at the expense of increasing the weight of the spar can decrease the overall operating efficiency of the wind turbine. As such, it would be useful to provide a wind turbine blade with a spar having an improved fiber alignment that facilitates obtaining a load bearing characteristic of the spar while decreasing the number of fibers used to fabricate the spar, thereby decreasing the weight of the wind turbine blade and increasing the overall operating efficiency of the wind turbine.

In one aspect according to the present invention , a spar for a wind turbine rotor blade is provided. The spar includes a support member and a spar cap coupled to the support member. The spar cap includes a plurality of pultruded profile segments.

In another aspect, a method for fabricating a spar for a wind turbine rotor blade is provided. The method includes providing a support member, fabricating a spar cap from a plurality of pultruded profile segments, and coupling the spar cap to the support member.

In a further aspect, a method for fabricating a pultruded profile for a spar for use with a wind turbine rotor blade is provided. The method includes providing a plurality of reinforcing fibers, providing a plurality of thermoplastic fibers, and pultruding the plurality of reinforcing fibers and the plurality of thermoplastic fibers to form a profile.

Various aspects and embodiments of the present invention will now be described in connection with the accompanying drawings, in which:
Figure 1 is a perspective view of a portion of an exemplary wind turbine;
Figure 2 is a schematic sectional view of a blade of the wind turbine shown in Figure 1 and taken along line 2-2;
Figure 3 is a perspective view of a spar of the blade shown in Figure 2;
Figure 4 is a schematic view of a first pultrusion system for fabricating a pultruded profile segment suitable for fabricating a first spar cap and/or a second spar cap of the spar shown in Figures 2 and 3;
Figure 5 is a schematic view of a second pultrusion system for fabricating a pultruded profile segment suitable for fabricating the first spar cap and/or the second spar cap of the spar shown in Figures 2 and 3;
Figure 6 is a schematic view of a third pultrusion system for fabricating a pultruded profile segment suitable for fabricating the first spar cap and/or the second spar cap of the spar shown in Figures 2 and 3;
Figure 7 is a plan view of a pultruded profile segment fabricated using the first pultrusion system shown in Figure 4, the second pultrusion system shown in Figure 5, or the third pultrusion system shown in Figure 6;
Figure 8 is a side view of a stack of pultruded profile segments for use in fabricating the first spar cap and/or the second spar cap of the spar shown in Figures 2 and 3;
Figure 9 is a schematic sectional view of a vacuum assembly for use in fabricating the first spar cap and/or the second spar cap shown in Figures 2 and 3; and
Figure 10 is a flow chart of a method for fabricating the spar shown in Figures 2 and 3.

The following detailed description describes a spar and a method for fabricating the spar by way of example and not by way of limitation. The description enables one of ordinary skill in the art to make and use the disclosure, and the description describes several embodiments of the disclosure, including what is presently believed to be the preferred mode of carrying out the disclosure. The disclosure is described herein as being applied to an exemplary embodiment, namely, a spar for a wind turbine blade. However, it is contemplated that this disclosure has general application to spars in a broad range of systems and in a variety of applications other than wind turbines.

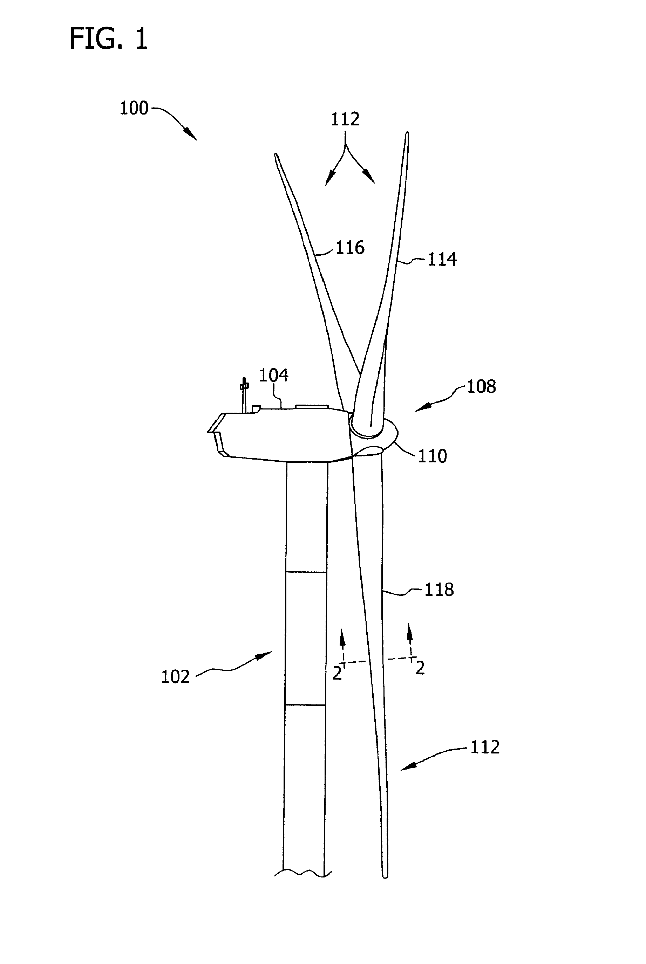

Figure 1 is a perspective view of a portion of an exemplary wind turbine 100. In the exemplary embodiment, wind turbine 100 is a horizontal axis wind turbine. Alternatively, wind turbine 100 may be a vertical axis wind turbine. Wind turbine 100 includes a tower 102 erected from a foundation (not shown), a nacelle 104 mounted on tower 102, and a rotor 108 rotatably coupled to nacelle 104. Rotor 108 includes a rotatable hub 110 and a plurality of blades 112 coupled to and extending outwardly from hub 110. In the exemplary embodiment, blades 112 include a first blade 114, a second blade 116, and a third blade 118. In other embodiments, rotor 108 may include any suitable number of blades 112. In the exemplary embodiment, blades 112 are equidistantly spaced about hub 110 to facilitate enabling kinetic energy of the wind to be converted into rotational energy and, subsequently, into electrical energy. Alternatively, blades 112 may be spaced any suitable distance from one another about hub 110.

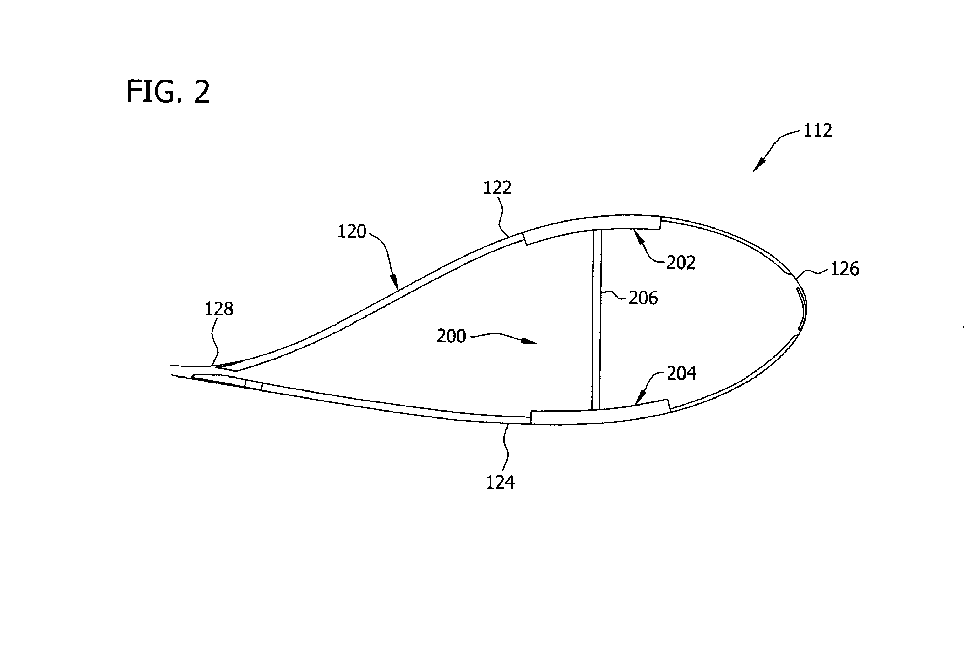

Figure 2 is a schematic sectional view of blade 112 taken along line 2-2. In the exemplary embodiment, blade 112 includes a spar 200 and a skin 120 that envelops spar 200 to define a pressure side 122, a suction side 124, a leading edge 126, and a trailing edge 128 of blade 112. In the exemplary embodiment, spar 200 includes a first spar cap 202, a second spar cap 204, and a support member 206 (e.g., a shear web material) extending between first spar cap 202 and second spar cap 204. Spar 200 has a cross-sectional shape similar to an I-beam (i.e., support member 206 extends between and substantially perpendicular to first spar cap 202 and second spar cap 204). In other embodiments, spar 200 may have a substantially square or rectangular cross-sectional shape. For example, spar 200 may include two substantially parallel support members 206 that are spaced apart from one another and extend between and substantially perpendicular to first spar cap 202 and/or second spar cap 204 such that spar 200 forms a hollow central portion. Alternatively, spar 200 may have any suitable cross-sectional shape that facilitates enabling spar 200 to function as described herein. In the exemplary embodiment, first spar cap 202 and/or second spar cap 204 are fabricated using a pultrusion process, as described below. In further embodiments, support member 206 may be fabricated using any suitable process including, without limitation, a pultrusion process. In a particular embodiment, first spar cap 202 and/or second spar cap 204 are fabricated using a pultrusion process, and support member 206 is fabricated using a process that does not include pultrusion. In the exemplary embodiment, first spar cap 202 and second spar cap 204 are substantially the same and are bonded to support member 206 using any suitable adhesive material. In this embodiment, first spar cap 202 and second spar cap 204 are formed separately from support member 206 and are bonded to support member 206.

Alternatively, first spar cap 202 and/or second spar cap 204 may not be substantially the same and may be fabricated and/or coupled to support member 206 in any suitable manner.

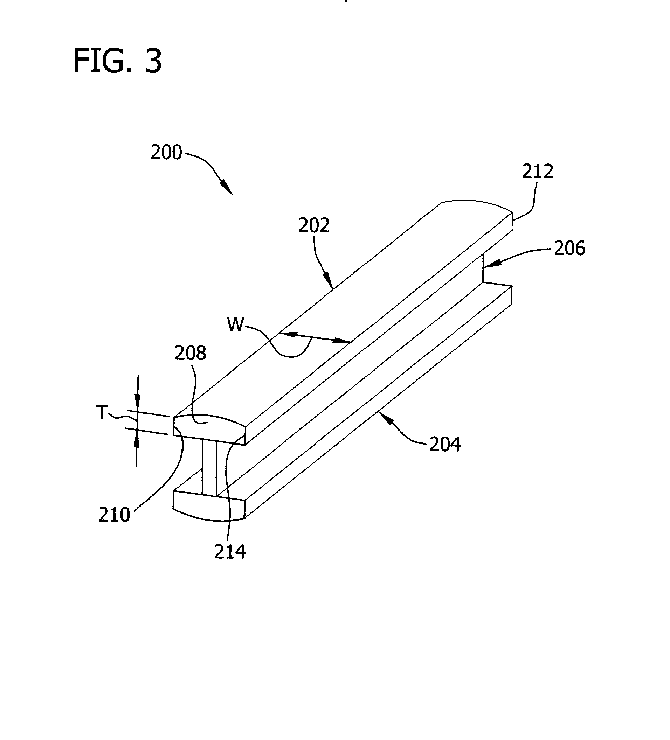

Figure 3 is a perspective view of spar 200. In the exemplary embodiment, first spar cap 202 has a first end 208, a first side 210, a second end 212 opposite first end 208, and a second side 214 opposite first side 210, and first spar cap 202 is fabricated from a stack of pultruded profile segments, as described below. In one embodiment, first spar cap 202 has a width W from first side 210 to second side 214 that is substantially uniform from first end 208 to second end 212. In another embodiment, first spar cap 202 has a thickness T that varies from first end 208 to second end 212. In some embodiments, thickness T may vary from first side 210 to second side 214. In other embodiments, width W and/or thickness T may or may not vary in any suitable manner. As used herein, the term "pultruded profile segment" refers to a separate piece of a profile fabricated using a pultrusion process.

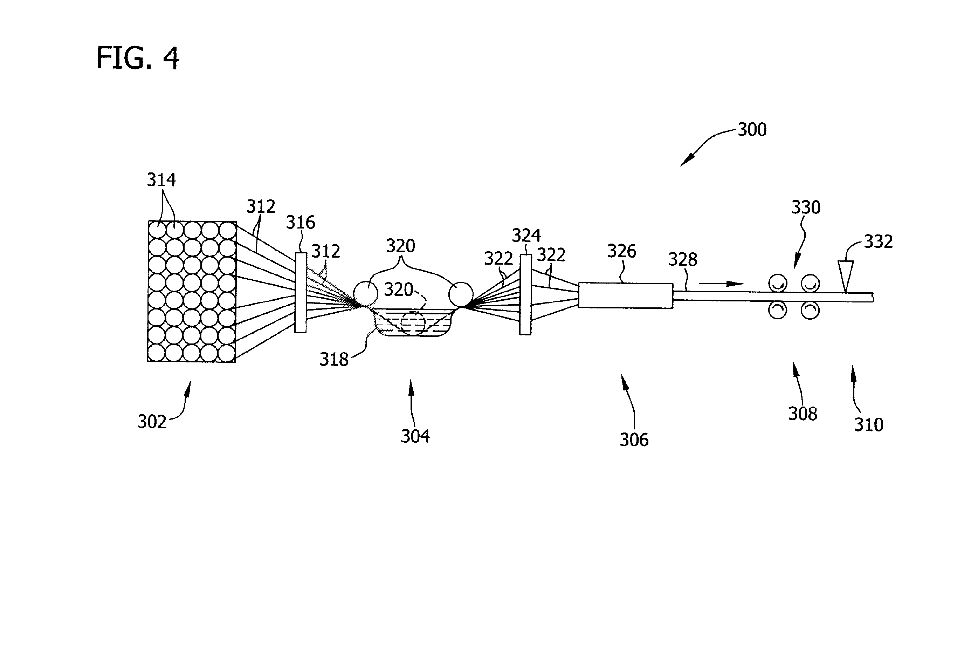

Figure 4 is a schematic view of a first pultrusion system 300 for fabricating a pultruded profile segment suitable for fabricating first spar cap 202 and/or second spar cap 204. In the exemplary embodiment, first pultrusion system 300 includes a first station 302, a second station 304, a third station 306, a fourth station 308, and a fifth station 310. At first station 302, a plurality of reinforcing fibers 312 are pulled from a plurality of creels 314 to facilitate continuously feeding reinforcing fibers 312 to second station 304. In the exemplary embodiment, reinforcing fibers 312 are carbon fibers. In another embodiment, reinforcing fibers 312 may be glass fibers. In other embodiments, reinforcing fibers 312 may be any suitable fiber for fabricating first spar cap 202 and/or second spar cap 204. At second station 304, reinforcing fibers 312 are directed through a first organizing panel 316 to facilitate arranging reinforcing fibers 312, such as, for example, in a predefined pattern. After being arranged, reinforcing fibers 312 proceed through a resin bath 318 to facilitate impregnating reinforcing fibers 312 with a resin. Proximate resin bath 318, reinforcing fibers 312 pass over and/or under rolling bars 320 to facilitate increasing a bond of the resin with reinforcing fibers 312. In the exemplary embodiment, resin bath 318 contains a thermosetting resin (hereinafter referred to as a "thermoset" resin). Alternatively, resin bath 318 may contain any suitable resin that facilitates bonding or coupling reinforcing fibers 312.

In the exemplary embodiment, reinforcing fibers 312 exit resin bath 318 as resin-impregnated reinforcing fibers 322 and are directed through a second organizing panel 324. After passing through second organizing panel 324, resin-impregnated reinforcing fibers 322 proceed to third station 306 and into a die 326, in which an exothermic reaction facilitates curing resin-impregnated reinforcing fibers 322 into a solid pultruded profile 328 having a substantially constant cross-section, as described below. Upon exiting die 326, pultruded profile 328 is cooled using any suitable cooling process, such as, for example, ambient air cooling, forced air cooling, or liquid stream cooling, thereby strengthening pultruded profile 328. Once pultruded profile 328 is sufficiently cooled, pultruded profile 328 proceeds through fourth station 308, at which a puller mechanism 330 grips and pulls pultruded profile 328, thereby pulling resin-impregnated reinforcing fibers 322 through die 326. In the exemplary embodiment, puller mechanism 330 may be any suitable device, such as, for example, an intermittent-pull reciprocating clamp, a continuous-pull reciprocating clamp, a continuous belt, or a cleated chain. From fourth station 308, pultruded profile 328 enters fifth station 310, at which a cutter mechanism 332 cuts pultruded profile 328 into pultruded profile segments of a desired length. In the exemplary embodiment, cutter mechanism 332 may be any suitable cutting device, such as, for example, a dry saw or a wet saw. In alternative embodiments, first pultrusion system 300 may include any suitable component operable in any suitable manner that facilitates fabricating a pultruded profile segment as described herein.

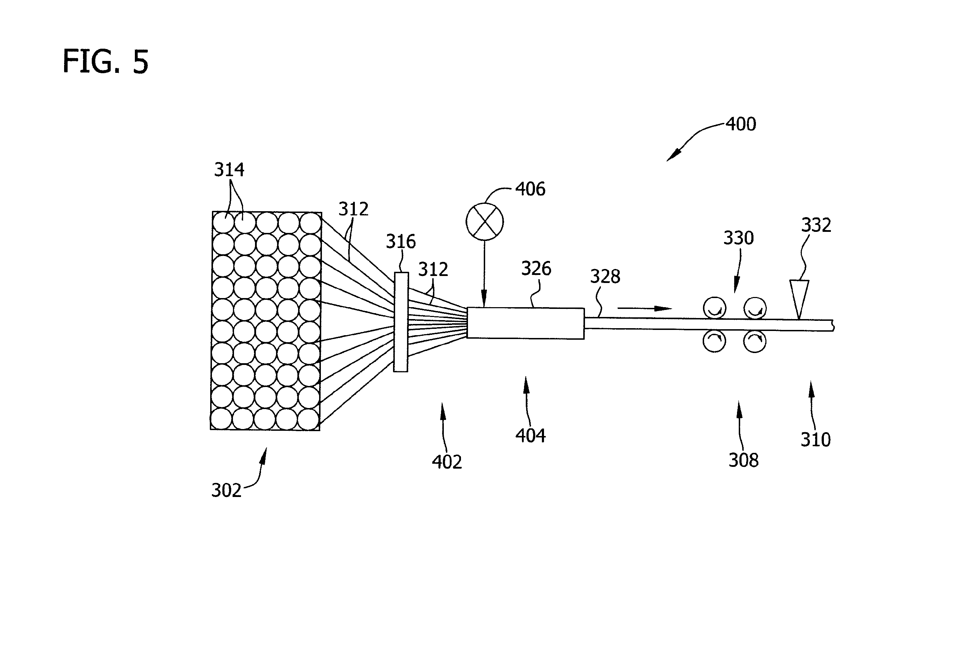

Figure 5 is a schematic view of a second pultrusion system 400 for fabricating a pultruded profile segment suitable for fabricating first spar cap 202 and/or second spar cap 204. In the exemplary embodiment, second pultrusion system 400 is similar to first pultrusion system 300, and similar components are indicated using the same reference numerals used in Figure 4. In the exemplary embodiment, second pultrusion system 400 has a second station 402 that does not include resin bath 318 or second organizing panel 324 and a third station 404 that includes a resin pump 406 coupled in flow communication with die 326. Resin pump 406 facilitates delivering resin (e.g., a thermoplastic resin in oligomer form or other liquid resins, including thermoset resins) into die 326 such that, after reinforcing fibers 312 proceed from first organizing panel 316 into die 326, reinforcing fibers 312 are impregnated with resin and, if a thermoplastic resin is used, cooled into pultruded profile 328 within die 326.

In other embodiments, third station 404 may include an injection molding machine, rather than resin pump 406, for thermoplastic resins. In alternative embodiments, second pultrusion system 400 may include any suitable component operable in any suitable manner that facilitates fabricating a pultruded profile segment as described herein.

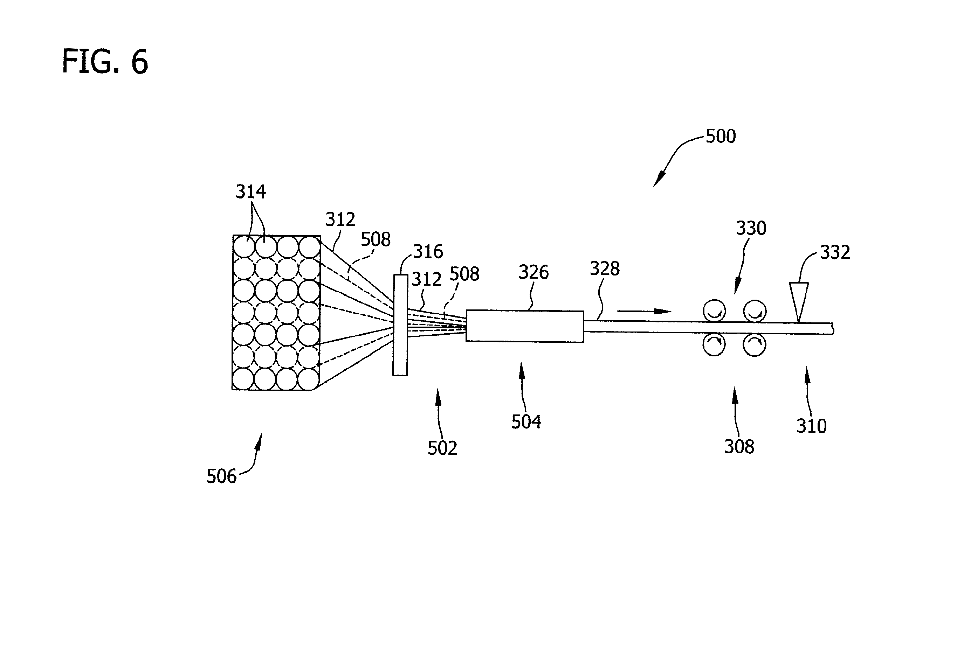

Figure 6 is a schematic view of a third pultrusion system 500 for fabricating a pultruded profile segment suitable for fabricating first spar cap 202 and/or second spar cap 204. In the exemplary embodiment, third pultrusion system 500 is similar to first pultrusion system 300 and second pultrusion system 400, and similar components are indicated using the same reference numerals used in Figures 4 and 5. In the exemplary embodiment, third pultrusion system 500 has a second station 502 that does not include resin bath 318 or second organizing panel 324 and a third station 504 that does not include resin pump 406. Rather, third pultrusion system 500 has a first station 506 that includes thermoplastic fibers 508 (e.g., polypropylene fibers or nylon fibers) in addition to reinforcing fibers 312 such that thermoplastic fibers 508 and reinforcing fibers 312 are pulled from creels 314 to facilitate continuously feeding thermoplastic fibers 508 and reinforcing fibers 312 through first organizing panel 316 of second station 502. Thus, when thermoplastic fibers 508 and reinforcing fibers 312 are directed into die 326 of third station 504, thermoplastic fibers 508 are heated within die 326 to facilitate impregnating reinforcing fibers 312 with thermoplastic resin and forming pultruded profile 328 that is subsequently cooled. In alternative embodiments, third pultrusion system 500 may include any suitable component operable in any suitable manner that facilitates fabricating a pultruded profile segment as described herein.

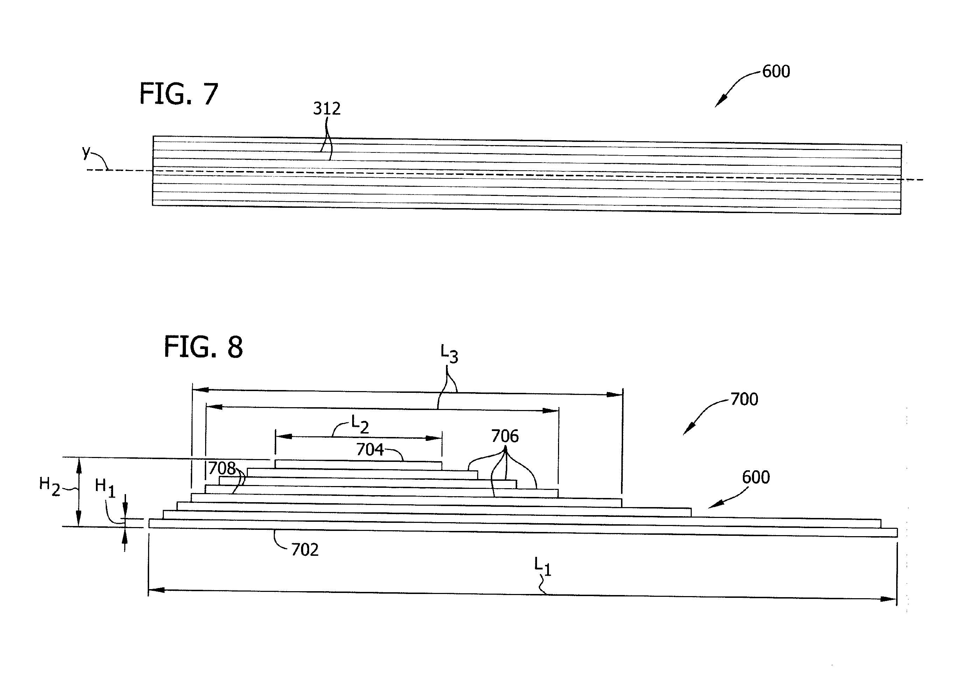

Figure 7 is a plan view of a pultruded profile segment 600 fabricated using first pultrusion system 300, second pultrusion system 400, or third pultrusion system 500.

Figure 8 is a side view of a stack 700 of pultruded profile segments 600 for use in fabricating first spar cap 202 and/or second spar cap 204. In the exemplary embodiment, stack 700 includes a plurality of pultruded profile segments 600 layered atop of one another. In some embodiments, pultruded profile segments 600 of stack 700 may be arranged side-by-side or in any other suitable formation. In other embodiments, stack 700 may have any suitable number of pultruded profile segments 600 having any suitable thicknesses that facilitate fabricating first spar cap 202 and/or second spar cap 204.

In the exemplary embodiment, each pultruded profile segment 600 of stack 700 has a generally rectangular planform. In other embodiments, each pultruded profile segment 600 may have any suitable planform that facilitates enabling first spar cap 202 and/or second spar cap 204 to function as described herein. As set forth above, each pultruded profile segment 600 is fabricated using reinforcing fibers 312 (e.g., carbon fibers, glass fibers, etc.) that are impregnated with either a thermoset resin or a thermoplastic resin. In one embodiment, each pultruded profile segment 600 includes reinforcing fibers 312 that are oriented in substantially the same direction relative to an axis Y of pultruded profile segment 600 (hereinafter referred to as a "unidirectional fiber orientation" of pultruded profile segment 600). In the exemplary embodiment, the unidirectional fiber orientation is substantially parallel to axis Y. In some embodiments, the unidirectional fiber orientation may have any suitable orientation relative to axis Y. In other embodiments, reinforcing fibers 312 may not be oriented in substantially the same direction relative to axis Y (e.g., reinforcing fibers 312 may be woven together). Alternatively, reinforcing fibers 312 may be oriented in any suitable direction relative to axis Y.

In the exemplary embodiment, pultruded profile segments 600 of stack 700 include a first pultruded profile segment 702, a second pultruded profile segment 704, and a plurality of intermediate pultruded profile segments 706 between first pultruded profile segment 702 and second pultruded profile segment 704. In one embodiment, first pultruded profile segment 702 has a first length L₁, second pultruded profile segment 704 has a second length L₂ that is less than first length L₁, and each intermediate pultruded profile segment 706 has an intermediate length L₃ that is less than first length L₁ and greater than second length L₂ such that stack 700 has a first height H₁ and a second height H₂ that is different than first height H₁. In some embodiments, intermediate length L₃ sequentially decreases from one intermediate pultruded profile segment 706 to the next intermediate pultruded profile segment 706 as intermediate pultruded profile segments 706 proceed from first pultruded profile segment 702 to second pultruded profile segment 704. In other embodiments, intermediate pultruded profile segments 706 may have any suitable intermediate lengths arranged in any suitable manner that facilitates enabling first spar cap 202 and/or second spar cap 204 to function as described herein. In one embodiment, the unidirectional fiber orientation varies among at least one of first pultruded profile segment 702, second pultruded profile segment 704, and intermediate pultruded profile segments 706 (e.g., first pultruded profile segment 702 may have reinforcing fibers 312 oriented at about 45° relative to axis Y, and at least one intermediate pultruded profile segment 706 may have reinforcing fibers 312 oriented at about -45° relative to axis Y). In another embodiment, the unidirectional fiber orientation may not vary throughout stack 700. In alternative embodiments, stack 700 may include at least one pultruded profile segment 600 that does not have a unidirectional fiber orientation, as described above. In some embodiments, pultruded profile segments 600 of stack 700 may be fused together at particular points using welding tools to facilitate maintaining an alignment of stack 700 during subsequent stages of fabrication.

In the exemplary embodiment, if pultruded profile segments 600 of stack 700 are fabricated using first pultrusion system 300 (e.g., if pultruded profile segments 600 are fabricated from a thermoset resin), each pultruded profile segment 600 is bonded to an adjacent pultruded profile segment 600 via a sheet 708 of adhesive material placed therebetween. In one embodiment, each sheet 708 has a shape that is substantially rectangular (e.g., a shape that is substantially similar to the shape of at least one of the pultruded profile segments 600 being bonded together by sheet 708). In another embodiment, any sheet 708 may have any suitable shape that facilitates bonding adjacent pultruded profile segments 600. In other embodiments, pultruded profile segments 600 may be bonded together using any suitable adhesive (e.g., an adhesive in liquid form, an adhesive in paste form, an adhesive in tape form, etc.). In the exemplary embodiment, if pultruded profile segments 600 of stack 700 are fabricated using either second pultrusion system 400 or third pultrusion system 500 (e.g., if pultruded profile segments 600 are fabricated from a thermoplastic resin), pultruded profile segments 600 do not necessarily have to be bonded together via adhesive. Rather, pultruded profile segments 600 fabricated using either second pultrusion system 400 or third pultrusion system 500 may be bonded together via a thermo-forming operation within a vacuum assembly 800, as described below. In alternative embodiments, pultruded profile segments 600 fabricated using first pultrusion system 300, second pultrusion system 400, and/or third pultrusion system 500 may be coupled together using any suitable adhesive material and/or suitable fastening mechanism in any suitable manner.

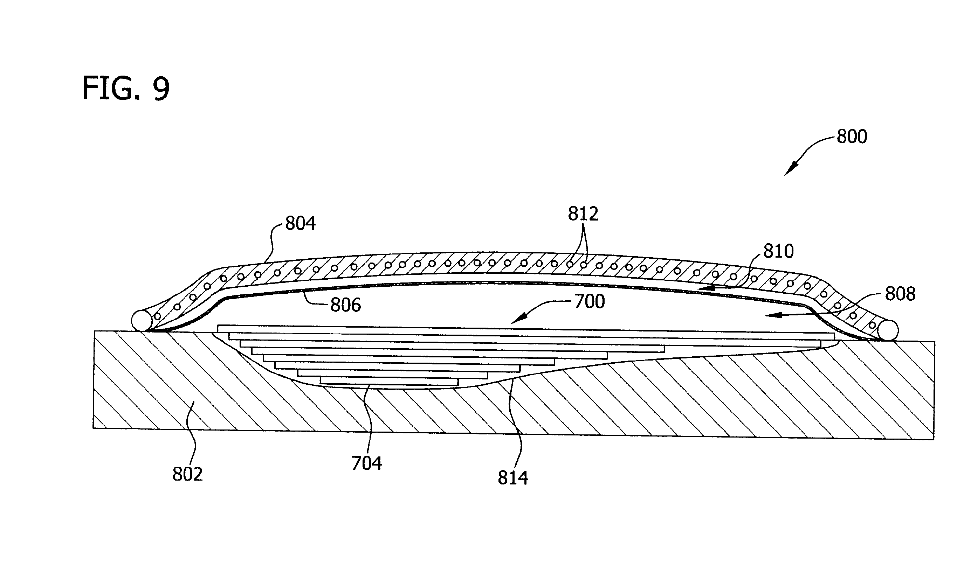

Figure 9 is a schematic sectional view of vacuum assembly 800. In the exemplary embodiment, vacuum assembly 800 includes a mold 802, a bag 804 coupled to mold 802, and a release film 806 disposed between bag 804 and mold 802 such that a vacuum chamber 808 is defined between release film 806 and mold 802 and such that a breathing chamber 810 is defined between bag 804 and release film 806. In the exemplary embodiment, bag 804 includes a plurality of breathing apertures 812 that facilitate entry of fluid (e.g., air) into breathing chamber 810, and mold 802 has an indentation 814 sized to receive stack 700, as described below. In one embodiment, indentation 814 has a contour that substantially matches a contour of first spar cap 202 and/or second spar cap 204. In some embodiments, vacuum assembly 800 may not include bag 804, release film 806, and/or breathing apertures 812. In other embodiments, vacuum assembly 800 may include any suitable component that facilitates fabricating first spar cap 202 and/or second spar cap 204.

In the exemplary embodiment, stack 700 is inserted into vacuum chamber 808 such that second pultruded profile segment 704 is adjacent mold 802 within indentation 814. With stack 700 at least partially within indentation 814 of mold 802, stack 700 is subjected to a thermo-forming operation in which heat is applied to stack 700 such that the thermoplastic resin flows between pultruded profile segments 600 to bond pultruded profile segments 600 together. During heating, however, a pressure (e.g., atmospheric pressure or higher pressure) is applied to stack 700 to facilitate maintaining a tension of reinforcing fibers 312 (e.g., to facilitate maintaining the unidirectional fiber orientation of reinforcing fibers 312) when the thermoplastic resin flows between adjacent pultruded profile segments 600. After heating, stack 700 is cooled into a substantially solid structure using any suitable cooling process, and the substantially solid structure is removed from mold 802 and is subsequently used in first spar cap 202 or second spar cap 204. In some embodiments, after cooling, the substantially solid structure may be finish machined into a desired shape for use as first spar cap 202 or second spar cap 204. In other embodiments, vacuum assembly 800 may also be used to bond together pultruded profile segments 600 fabricated using first pultrusion system 300 (e.g., vacuum assembly 800 may be used to heat the adhesive between adjacent pultruded profile segments 600 fabricated from thermoset resin to facilitate bonding the adjacent pultruded profile segments 600 together).

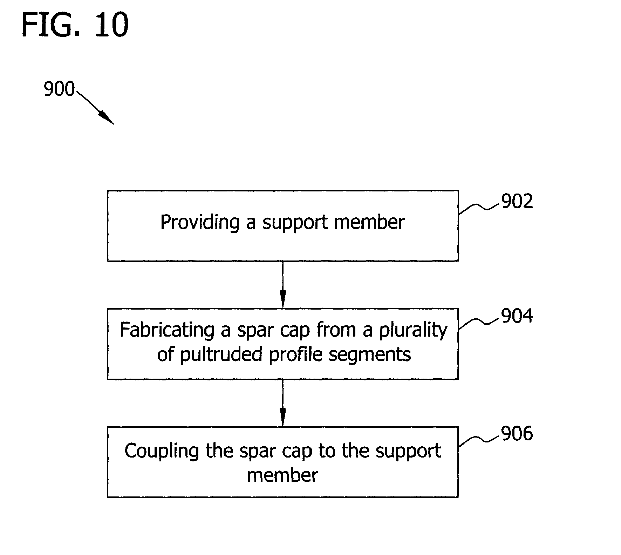

Figure 10 is a flow chart of a method 900 for fabricating a spar as described herein. In the exemplary embodiment, method 900 includes providing 902 a support member, fabricating 904 a spar cap from a plurality of pultruded profile segments, and coupling 906 the spar cap to the support member.

Various of the methods and systems described herein facilitate obtaining uniform thickness of a profile segment of a spar cap and limiting/preventing undulations along a length of the reinforcing fibers of the profile segment, thereby increasing the alignment of the reinforcing fibers in the spar cap. The methods and systems described herein further facilitate increasing a load bearing characteristic of individual reinforcing fibers in a spar cap such that, to achieve a given load bearing characteristic for the entire spar cap, less reinforcing fibers are used and the mass of the spar cap is reduced. Additionally, the methods and systems described herein facilitate using less expensive reinforcing fibers, such as carbon fibers, when fabricating a spar cap, thereby reducing a material cost and a labor cost associated with fabricating a spar cap. As such, the methods and systems described herein facilitate reducing a cost associated with fabricating a wind turbine, while increasing the useful life of the wind turbine.

Exemplary embodiments of a spar and methods for fabricating the spar are described above in detail. The methods and systems described herein are not limited to the specific embodiments described herein, but rather, components of the systems and/or steps of the methods may be utilized independently and separately from other components and/or steps described herein. For example, the methods and systems described herein may have other applications not limited to practice with wind turbines, as described herein. Rather, the methods and systems described herein can be implemented and utilized in connection with various other industries.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A spar for a wind turbine rotor blade, said spar comprising:
   a support member; and,
   a spar cap coupled to said support member, said spar cap comprising a plurality of pultruded profile segments.
2. A spar in accordance with clause 1, wherein said spar cap has a first side and a second side opposing said first side, a thickness of said spar cap varying between said first side and said second side.
3. A spar in accordance with any preceding clause, wherein said spar cap is formed separately from said support member, said spar cap bonded to said support member.
4. A spar in accordance with any preceding clause, wherein said support member comprises a shear web material.
5. A spar in accordance with any preceding clause, wherein said plurality of pultruded profile segments comprises a first pultruded profile segment having a first length and a second pultruded profile segment having a second length different than the first length.
6. A spar in accordance with any preceding clause, wherein each pultruded profile segment of said plurality of pultruded profile segments comprises a plurality of reinforcing fibers, said plurality of reinforcing fibers comprising at least one of carbon reinforcing fibers and glass reinforcing fibers.
7. A spar in accordance with any preceding clause, wherein said plurality of reinforcing fibers have a unidirectional fiber orientation.
8. A spar in accordance with any preceding clause, wherein said plurality of reinforcing fibers are impregnated with a thermoset resin.
9. A spar in accordance with any preceding clause, further comprising an adhesive that bonds together adjacent pultruded profile segments of said plurality of pultruded profile segments.
10. A spar in accordance with any preceding clause, wherein said plurality of reinforcing fibers are impregnated with a thermoplastic resin.
11. A method for fabricating a spar for a wind turbine rotor blade, said method comprising:
   providing a support member;
   fabricating a spar cap from a plurality of pultruded profile segments; and,
   coupling the spar cap to the support member.
12. A method in accordance with any preceding clause, further comprising fabricating the spar cap with a first side, a second side, and a thickness that varies between the first side and the second side.
13. A method in accordance with any preceding clause, wherein fabricating a spar cap from a plurality of pultruded profile segments further comprises fabricating the spar cap from a first pultruded profile segment having a first length and a second pultruded profile segment having a second length different than the first length.
14. A method in accordance with any preceding clause, wherein fabricating a spar cap from a plurality of pultruded profile segments further comprises fabricating each pultruded profile segment of the plurality of pultruded profile segments with a plurality of reinforcing fibers, the plurality of reinforcing fibers including at least one of carbon reinforcing fibers and glass reinforcing fibers.
15. A method in accordance with any preceding clause, further comprising arranging the plurality of reinforcing fibers in a unidirectional fiber orientation.
16. A method in accordance with any preceding clause, further comprising impregnating the plurality of reinforcing fibers with a thermoset resin.
17. A method in accordance with any preceding clause, further comprising bonding together adjacent pultruded profile segments of the plurality of pultruded profile segments with an adhesive.
18. A method in accordance with any preceding clause, further comprising impregnating the plurality of reinforcing fibers with a thermoplastic resin.
19. A method in accordance with any preceding clause, further comprising:
   inserting the plurality of pultruded profile segments into a vacuum assembly;
   applying a pressure to the plurality of pultruded profile segments; and,
   heating the plurality of pultruded profile segments.
20. A method for fabricating a pultruded profile for a spar for use with a wind turbine rotor blade, said method comprising:
   providing a plurality of reinforcing fibers;
   providing a plurality of thermoplastic fibers; and,
   pultruding the plurality of reinforcing fibers and the plurality of thermoplastic fibers to form a profile.

## Claims

1. A spar (200) for a wind turbine rotor blade (112), said spar comprising:
a support member (206); and
a spar cap (202,204) coupled to said support member, said spar cap comprising a plurality of pultruded profile segments (600).

2. A spar (200) in accordance with claim 1, wherein said spar cap (202,204) has a first side (210) and a second side (214) opposing said first side, a thickness of said spar cap varying between said first side and said second side.

3. A spar (200) in accordance with any preceding claim, wherein said spar cap (202,204) is formed separately from said support member (206), said spar cap bonded to said support member.

4. A spar (200) in accordance with any preceding claim, wherein said support member (206) comprises a shear web material.

5. A spar (200) in accordance with any preceding claim, wherein said plurality of pultruded profile segments (600) comprises a first pultruded profile segment (702) having a first length and a second pultruded profile segment (704) having a second length different than the first length.

6. A spar (200) in accordance with any preceding claim, wherein each pultruded profile segment of said plurality of pultruded profile segments (600) comprises a plurality of reinforcing fibers (312), said plurality of reinforcing fibers comprising at least one of carbon reinforcing fibers and glass reinforcing fibers.

7. A spar (200) in accordance with claim 6, wherein said plurality of reinforcing fibers (312) have a unidirectional fiber orientation.

8. A spar (200) in accordance with claim 6 or claim 7, wherein said plurality of reinforcing fibers (312) are impregnated with a thermoset resin.

9. A spar (200) in accordance with any preceding claim, further comprising an adhesive that bonds together adjacent pultruded profile segments of said plurality of pultruded profile segments (600).

10. A spar (200) in accordance with any of claims 6 to 9, wherein said plurality of reinforcing fibers (600) are impregnated with a thermoplastic resin.
